# EUROPEAN PATENT SPECIFICATION

(11) **EP 2 784 253 B1**
(45) Date of publication and mention of the grant of the patent: **14.08.2019**
(21) Application number: 13161126.1
(22) Date of filing: 26.03.2013
(51) Int. Cl.: E05D 7/10, H02G 3/14, E05D 3/02, H02G 3/08

(54) **Electrical installation box**
Elektroinstallationskasten
Boîte d'installation électrique

(43) Date of publication of application: 01.10.2014
(73) Proprietor: ABB Schweiz AG, 5400 Baden (CH)
(72) Inventor: Gramola, Simone, 36060 Molvena (VI) (IT); Pezzato, Maurizio, 36065 Mussolente (VI) (IT)
(74) Representative: Giavarini, Francesco

(56) References cited:
- DE-A1-102004 051 215
- DE-U1-202007 003 787
- KR-U- 20100 010 418
- US-A- 4 967 924
- US-A- 6 133 531
- US-A1- 2009 049 648
- US-A1- 2009 255 703
- US-A1- 2012 111 597

## Description

The present patent disclosure relates to an installation box for electrical distribution applications, in particular of the type commonly indicated as consumer units.

As known, consumer units and more in general electrical installation boxes consist essentially of a box or container adapted to house inside it a certain number of electrical devices and components, which are usually mounted on mechanical supports, e.g. din-rail guides.

From a structural point of view, such boxes must be designed in order to guarantee a certain degree of protection for the devices housed, e.g. IP 40, IP 55, et cetera, as defined by national and international standards and rules.

To this end, known consumer units or installation boxes of the type according to the present disclosure have a suitably shaped housing which is formed by only one piece or by two or more parts securely connected to each other and made of electrical insulating plastics, and an opening/closing door which is connected therewith.

Patent document US 2009/0255703 discloses an electrical box assembly comprising a lid provided with a couple of radially extending hinge members, and a base having a further hinge member. The lid is pivotally connected to the base by mutually aligning all hinge members and inserting inside them an additional hinge pin. Additional priori art can be found in US 6 133 531 A and KR 2010 0010418 U.

Although known installation boxes perform properly all functions required there are still some aspects which can be further improved, in particular as regard to the way the door is connected to the housing.

Indeed, in prior art solutions the operative connection of the door with the related housing is realized by means of additional pieces which are first connected to the housing, e.g. by screwing, and then used as connecting and/or anchoring parts for the door.

The present disclosure is aimed at facing such issue and provides an installation box for electrical distribution applications according to claim 1.

Further characteristics and advantages will become apparent from the description of an installation box according to the present disclosure, illustrated only by way of non-limitative examples with the accompanying drawings, wherein:

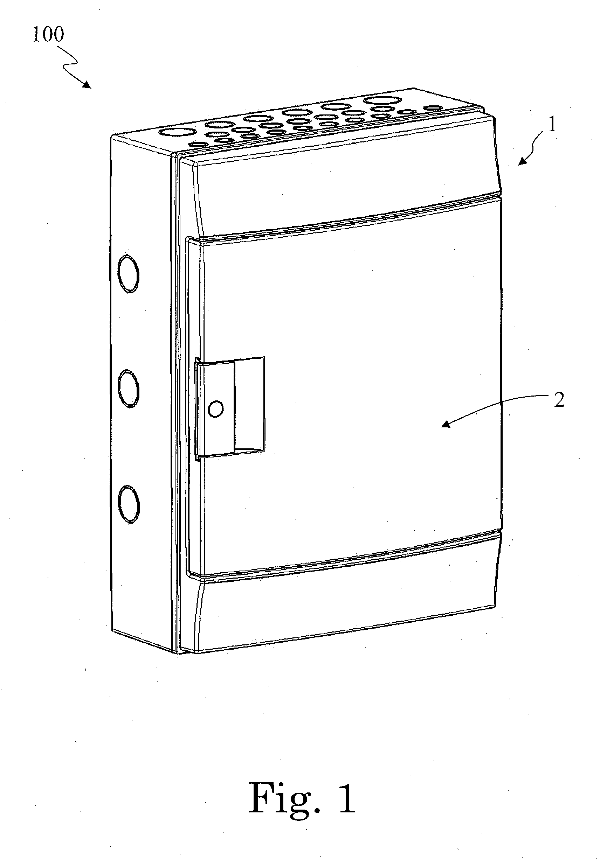

Figure 1 is a perspective view of an exemplary installation box according to the present disclosure in a closed position;
Figure 2 is a perspective view showing the installation box of figure 1 with the door open;
Figure 3 is a perspective exploded view showing the components of the installation box of figures 1 and 2 disassembled;
Figure 4 is an enlarged view of circled part A of figure 3;
Figure 5 is an enlarged view of circled part B of figure 3.

It should be noted that in the detailed description that follows, identical or similar components, either from a structural and/or functional point of view, have the same reference numerals; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

An installation box for electrical distribution applications according to the present disclosure is represented in the attached figures with the overall reference number 100.

The installation box 100 comprises: a housing 1 which is made of electrically insulating material, e.g. plastics is suitable to accommodate inside it one or more electrical devices, according to solutions well known in the art and therefore not described in details herein; a door 2, which is also made of electrically insulating material, e.g. plastics; and connecting means 10 for connecting the door 2 to the housing 1 in the way that it will described in details hereinafter.

As for the materials used for the door and/or the housing, any suitable material available on the market can be used, e.g. a recyclable thermoplastic material.

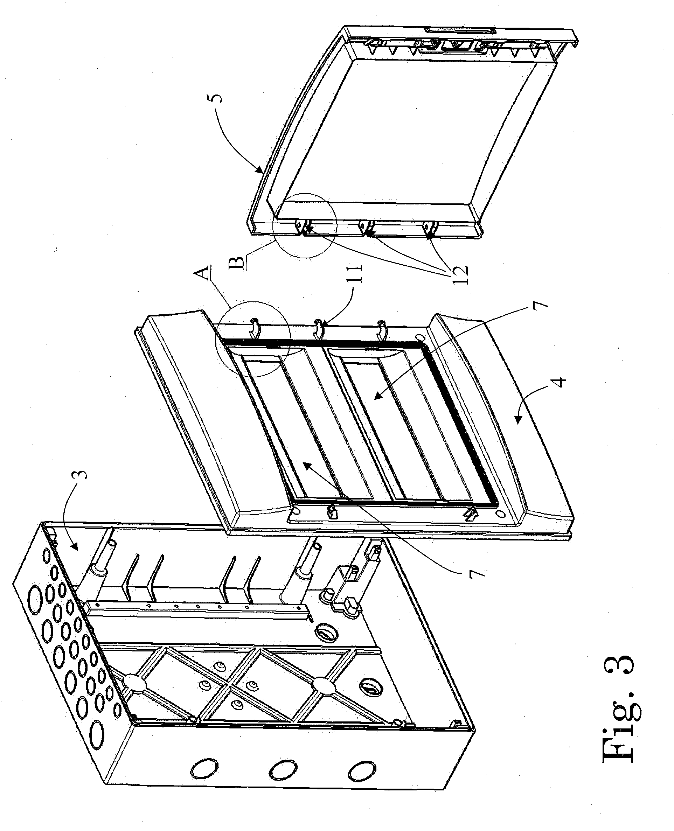

The housing 1 can be constituted by a single piece, or it can comprise two or more pieces connected together; in the exemplary embodiment illustrated, and as better illustrated in figure 3, the housing 1 comprises for instance a base 3 adapted to accommodate one or more electrical devices, and a cover 4 which has one or more windows 7 and is connected, e.g. screwed, to the base portion 3.

Clearly, the housing 1 could be differently structured, shaped or sized according to the specific needs or applications.

Advantageously, in the installation box 100 according to the present disclosure the connecting means 10 comprise one or more protuberances 11 which are integrally made with the body of the housing 1, namely they are realized monolithically with the body of the housing 1 or with the body of one of the parties forming the housing 1 if the housing comprises two or more pieces.

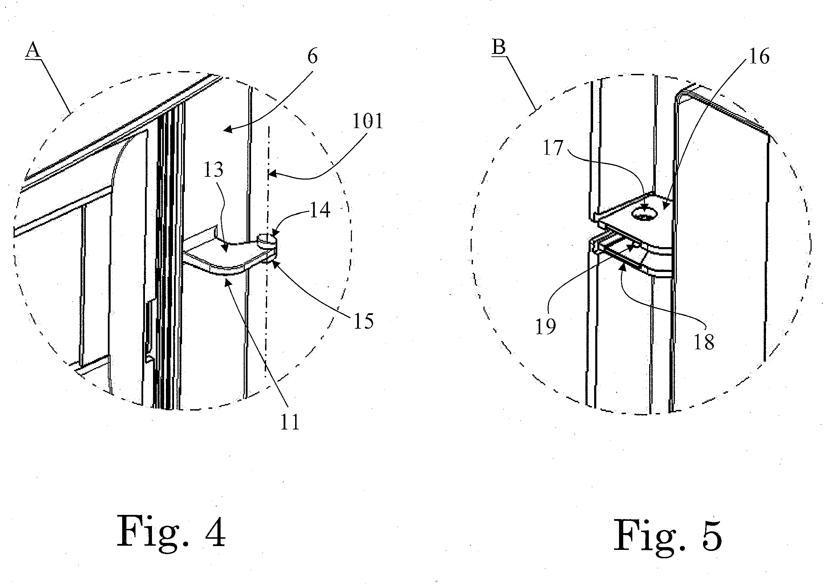

As better illustrated in figure 4, the one or more protuberances 11 extend(s) outwardly from one of the one or more pieces 3, 4 of the housing 1 towards the door 2, and they are configured in such a way that the door 2 is connected therewith rotating about a rotation axis 101 relative to the housing 1 itself.

Preferably, in the installation box 100 according to the present disclosure, the connecting means 10 further comprise one or more connection portions 12 which are integrally made with the body of the door 2; the one or more connection portions 12 extend(s) inwardly from the front face 5 of the door 2 towards the housing 1 and are configured so as each of them engages and forms together with an associated protuberance 11 a hinge-like mechanism, thus allowing the door 2 rotating about the rotation axis 101 relative to the housing 1 itself.

In particular, each of the one or more protuberances 11 preferably engages with a corresponding connection portion 12 in a snap-fit manner.

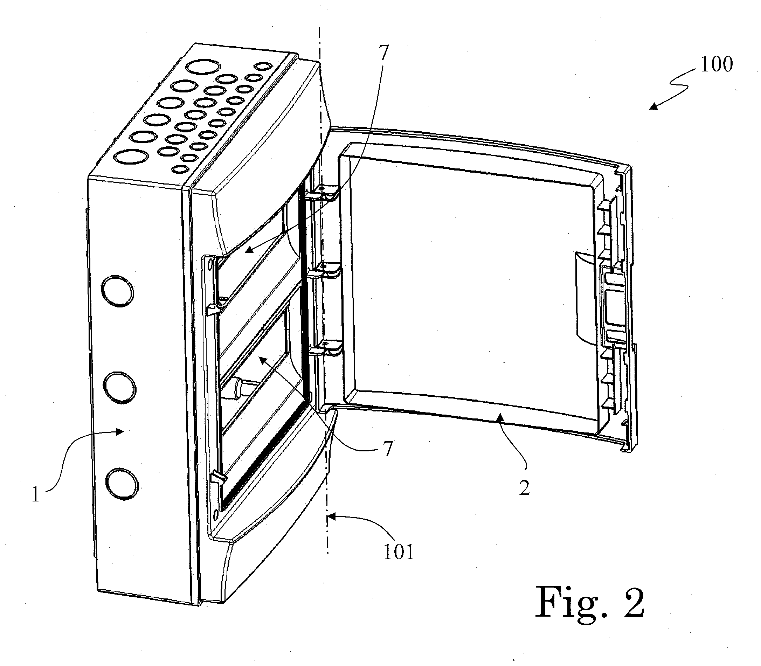

In the exemplary embodiment illustrated in the figures, there is provided a plurality of protuberances 11 which are all integrally made with and extend outwardly from the cover part 4 of the housing 1; in particular, as better visible in figure 2, the various protuberances 11 are positioned on a side of the cover part 4 and are spaced apart from each other and mutually aligned along the rotation axis 101.

In turn, as illustrated in figure 2, the connecting means 10 comprise a plurality of connection portions 12 which are integrally made with and extend inwardly from the front face 5 of the door 2 towards the housing 1; as above indicated, each connection portion 12 of the plurality of connection portions 12 is configured so as each engages and forms together with an associated protuberance 11 a hinge-like mechanism, with the various hinge-like mechanisms formed allowing the door 2 rotating about the rotation axis 101 relative to the housing 1 itself.

As illustrated in detail in figure 4, each protuberance 11 comprises a central elbow-shaped part 13 which protrudes transversally from a front part 6 of the housing 1, e.g. the cover 4, and at least a first pin 14 which protrudes transversally from the central elbow-shaped portion 13 along the rotation axis 101; more in particular, each protuberance 11 comprises a first pin 14 and a second pin 15 which protrude transversally from the central elbow-shaped portion 13 along the rotation axis 101 in directions opposite to each other.

As illustrated in figure 5, each connection portion 12 comprises at least a first substantially planar fin 16 which protrudes transversally from the front face 5 of the door 2 inwardly towards the housing 1; on the first fin 16 there is provided a through hole 17 which is suitable to receive a corresponding first pin 14 of an associated protuberance 11.

More in particular, in the embodiment illustrated, each connection portions 12 comprises a first substantially planar fin 16 and a second substantially planar fin 18 which protrude transversally and substantially parallel to each other from the front face 5 of the door 2 inwardly towards said housing 1; a first through hole 17 suitable to receive a corresponding first pin 14 and a second through hole 19 suitable to receive a corresponding second pin 15 are provided on the first planar fin 16 and the second planar fin 18, respectively.

The terms transversal or transversally hereby used encompass a direction non-parallel to the part referred to, and perpendicularity has to be considered a specific and in the embodiment illustrated preferred case of transverse direction.

Preferably, the first and second substantially planar fins 16, 18 are elastically deformable.

In practice, when the door 2 has to be connected to the housing 1, a user can simply press the side of the door 2 provided with the one or more connection portions 12 against the corresponding part of the housing 1 provided with the protuberances 11; the planar elbow-shaped portion 13 of a protuberance 11 enters between the two fins 16 18 of the associated connection portion 11. The two fins 16, 18 deform elastically allowing the first and second coupling pins 14, 15 to engage inside the corresponding holes 17, 19.

In this way, the one or more protuberances 11 engage each with a corresponding connection portion 12 forming an overall hinge-like mechanism which allows the door 2 rotating around the rotation axis 101 relative to the housing 1.

It has been found that the installation box 100 according to the present disclosure offers some improvements over prior art solutions; indeed, thanks in particular to the fact that the connections means are realized monolithically with the parts they are associated to, namely the door and the housing, respectively, the overall number of components utilized is reduced with respect to prior art solutions. Further, the structure of the previously described components allows a very simple and fast connection between the door and the housing.

The installation box 100 thus conceived is susceptible of modifications and variations, all of which are within the scope of the inventive concept as defined in particular by the appended claims. For example, it would be possible to adopt shaped bodies for the protuberances 11 and/or the connection portions 12 not necessarily identical to each other; it is possible to have only one protuberance 11 and only one corresponding connection portion 12; depending on the applications and specific needs, the housing could be realized in one single piece or in more than two pieces. Any of the previously described components may be differently shaped, or used in a different number or parts or elements, or the components previously described can be differently connected with respect to each other, provided they are suitable for the scope they are devised for.

Also the materials used, so long as they are compatible with the specific use and purpose, as well as the dimensions, may be any according to the requirements and the state of the art.

## Claims

1. An installation box (100) for electrical distribution applications, comprising:
- a housing (1) suitable to accommodate one or more electrical devices, said housing (1) comprising one or more pieces (3, 4) connected together and being made of electrically insulating material;
- a door (2) made of electrically insulating material;
- means (10) for connecting the door (2) to said housing (1);
**characterized in that** said connecting means (10) comprise:
- a plurality of protuberances (11) which are integrally made with and extend outwardly from one of said one or more pieces (3, 4) of the housing (1) towards said door (2), wherein said plurality of protuberances are configured so as said door (2) is connected therewith rotating about a rotation axis (101) relative to the housing (1) itself and are spaced apart from each other and aligned along said rotation axis (101), and **in that** said connecting means (10) further comprise a plurality of connection portions (12) which are integrally made with and extend inwardly from the front face (5) of the door (2) towards said housing (1), each of said plurality of connection portions (12) being configured so as each engages and forms together with an associated protuberance (11) a hinge-like mechanism, wherein each of said plurality of protuberances (11) comprises a central elbow-shaped part (13) which protrudes transversally from a front part (6) of one of said one or more pieces (3, 4) of the housing (1), and at least a first pin (14) protruding transversally from said central elbow-shaped portion (13) along said rotation axis (101) and wherein each of said plurality of connection portions (12) comprise at least a first substantially planar fin (16) which protrudes transversally from the front face (5) of the door (2) inwardly towards said housing (1), a through hole (17) suitable to receive a corresponding first pin (14) being provided on said first planar fin (16).

2. The installation box (100) according to claim 1, wherein each of said plurality of protuberances (11) engages with a corresponding connection portion (12) in a snap-fit manner.

3. The installation box (100) according to claim 1 or 2, wherein each of said plurality of protuberances (11) comprises a first pin (14) and a second pin (15) which protrude transversally from said central elbow-shaped portion (13) along said rotation axis (101) opposite to each other.

4. The installation box (100) according to claim 3, wherein each of said plurality of connection portions (12) comprises a first substantially planar fin (16) and a second substantially planar fin (18) which protrude transversally from the front face (5) of the door (2) inwardly towards said housing (1) and substantially parallel to each other, a first through hole (17) suitable to receive a corresponding first pin (14) and a second through hole (19) suitable to receive a corresponding second pin (15) being provided on said first planar fin (16) and said second planar fin (18), respectively.

5. The installation box (100) according to claim 4, wherein at least one of said first and second substantially planar fins (16, 18) is elastically deformable.

6. The installation box (100) according to one or more of the previous claims, wherein said housing (1) comprises a base (3) adapted to accommodate one or more electrical devices, and a cover (4) suitable to be connected to said base (3) and having one or more windows (7), wherein said one or more protuberances (11) are integrally made with and extend outwardly from said cover (4).

## Patentansprüche

1. Installationskasten (100) für elektrische Verteilungsanwendungen, umfassend:
- ein Gehäuse (1), welches geeignet ist, ein oder mehrere elektrische Vorrichtungen aufzunehmen, wobei das Gehäuse (1) ein oder mehrere Stücke (3, 4) umfasst, welche miteinander verbunden und aus elektrisch isolierendem Material hergestellt sind;
- eine Tür (2), welche aus elektrisch isolierendem Material hergestellt ist;
- Mittel (10) zum Verbinden der Tür (2) mit dem Gehäuse (1);
**dadurch gekennzeichnet, dass** die Verbindungsmittel (10) umfassen:
- eine Vielzahl von Erhebungen (11), welche ein stückig mit dem einen oder den mehreren Stücken (3, 4) des Gehäuses (1) hergestellt sind und sich davon nach außen zu der Tür (2) hin erstrecken, wobei die Vielzahl von Erhebungen konfiguriert sind, dass sie sich, wenn die Tür (2) dadurch verbunden ist, um eine Rotationsachse (101) relativ zu dem Gehäuse (1) selbst drehen, und voneinander beabstandet und entlang der Rotationsachse (101) angeordnet sind, und dass die Verbindungsmittel (10) weiter eine Vielzahl von Verbindungsabschnitten (12) umfassen, welche einstückig mit der Vorderseite (5) der Tür (2) hergestellt sind und sich davon nach innen zu dem Gehäuse (1) hin erstrecken, wobei jeder von der Vielzahl von Verbindungsabschnitten (12) konfiguriert ist, dass jeder in eine zugehörige Erhebung (11) eingreift und zusammen mit dieser einen scharnierartigen Mechanismus bildet, wobei jede von der Vielzahl von Erhebungen (11) einen zentralen winkelförmigen Teil (13) umfasst, welcher quer zu einem Vorderteil (6) von einem von dem einen oder den mehreren Stücken (3, 4) des Gehäuses (1) hervorsteht, und zumindest ein erster Stift (14) quer zu dem zentralen winkelförmigen Abschnitt (13) entlang der Rotationsachse (101) hervorsteht und wobei jeder von der Vielzahl von Verbindungsabschnitten (12) zumindest eine erste, im Wesentlichen ebene Rippe (16), welche quer von der Vorderseite (5) der Tür (2) nach innen zu dem Gehäuse (1) hin vorsteht, ein Durchgangsloch (17), welches geeignet ist, einen zugehörigen ersten Stift (14) aufzunehmen, welcher auf der ersten ebenen Rippe (16) bereitgestellt ist, umfasst.

2. Installationskasten (100) nach Anspruch 1, wobei jede von der Vielzahl von Erhebungen (11) in einen zugehörigen Verbindungsabschnitt (12) auf eine Schnappart eingreift.

3. Installationskasten (100) nach Anspruch 1 oder 2, wobei jede von der Vielzahl von Erhebungen (11) einen ersten Stift (14) und einen zweiten Stift (15) umfasst, welche quer von dem zentralen winkelförmigen Abschnitt (13) entlang der Rotationsachse (101) einander gegenüberliegend hervorstehen.

4. Installationskasten (100) nach Anspruch 3, wobei jeder von der Vielzahl von Verbindungsabschnitten (12) eine erste, im Wesentlichen ebene Rippe (16) und eine zweite, im Wesentlichen ebene Rippe (18), welche quer von der Vorderseite (5) der Tür (2) nach innen zu dem Gehäuse (1) hin und im Wesentlichen parallel zueinander hervorstehen, ein erstes Durchgangsloch (17), welches geeignet ist, einen zugehörigen ersten Stift (14) aufzunehmen, und ein zweites Durchgangsloch (19), welches geeignet ist, einen zugehörigen zweiten Stift (15) aufzunehmen, welche auf der ersten ebenen Rippe (16) bzw. der zweiten ebenen Rippe (18) bereitgestellt sind, umfasst.

5. Installationskasten (100) nach Anspruch 4, wobei zumindest eine von der ersten und zweiten, im Wesentlichen ebenen Rippe (16, 18) elastisch verformbar ist.

6. Installationskasten (100) nach einem oder mehreren der vorstehenden Ansprüche, wobei das Gehäuse (1) eine Basis (3), welche adaptiert ist, eine oder mehrere elektrische Vorrichtungen aufzunehmen, und eine Abdeckung (4), welche geeignet ist, mit der Basis (3) verbunden zu werden, und ein oder mehrere Fenster (7) aufweist, umfasst, wobei die eine oder mehreren Erhebungen (11) einstückig mit der Abdeckung (4) hergestellt sind und sich von dieser nach außen erstrecken.

## Revendications

1. Boîtier de montage (100) pour applications de distribution électrique comprenant :
- un logement (1) conçu pour recevoir un ou plusieurs dispositifs électriques, ledit logement (1) comprenant une ou plusieurs pièces (3, 4) reliées entre elles et étant composé de matériau isolant ;
- une porte (2) composée de matériau électriquement isolant ;
- des moyens (10) pour relier la porte (2) audit logement (1) ;
**caractérisé en ce que** lesdits moyens de liaison (10) comprennent :
- une pluralité de protubérances (11) intégralement composées avec et s'étendant vers l'extérieur d'une ou de plusieurs desdites pièces (3, 4) du logement (1) vers ladite porte (2), dans lequel ladite pluralité de protubérances sont configurées de façon à ce que ladite porte (2) est en liaison avec celles-ci tournant autour d'un axe de rotation (101) par rapport au logement (1) lui-même et sont disposées à distance les unes des autres et alignées le long dudit axe de rotation (101), et **en ce que** lesdits moyens de liaison (10) comprennent en outre une pluralité de parties de liaison (12) intégralement composées avec et s'étendant vers l'intérieur de la face avant (5) de la porte (2) vers ledit logement (1), chacune de ladite pluralité de parties de liaison (12) étant configurée de façon à ce que chacune engage et forme conjointement avec une protubérance associée (11) un mécanisme de type charnière, dans lequel chacune de ladite pluralité de protubérances (11) comprend une partie centrale en forme de coude (13) qui ressort transversalement d'une partie avant (6) d'une de ladite ou desdites pièces (3, 4) du logement (1), et au moins une première broche (14) ressortant transversalement de ladite partie centrale en forme de coude (13) le long dudit axe de rotation (101) et dans lequel chacun de ladite pluralité des parties de liaison (12) comprend au moins une première ailette sensiblement plane (16) qui ressort transversalement de la face avant (5) de la porte (2) vers l'intérieur vers ledit logement (1), un trou traversant (17) conçu pour recevoir une première broche correspondante (14) étant prévu sur ladite première ailette plane (16).

2. Boîtier de montage (100) selon la revendication 1, dans lequel chacune de ladite pluralité de protubérances (11) s'engage avec une partie de liaison correspondante (12) par enclenchement.

3. Boîtier de montage (100) selon la revendication 1 ou 2, dans lequel chacune de ladite pluralité de protubérances (11) comprend une première broche (14) et une seconde broche (15) qui ressortent transversalement de ladite partie centrale en forme de coude (13) le long dudit axe de rotation (101) se faisant face.

4. Boîtier de montage (100) selon la revendication 3, dans lequel chacune de ladite pluralité de parties de liaison (12) comprend une première ailette sensiblement plane (16) et une seconde ailette sensiblement plane (18) qui ressort transversalement de la face avant (5) de la porte (2) vers l'intérieur vers ledit logement (1) et sensiblement parallèles l'une à l'autre, un premier trou traversant (17) conçu pour recevoir une première broche correspondante (14) et un second trou traversant (19) conçu pour recevoir une seconde broche (15) étant prévu sur ladite première ailette plane (16) et ladite seconde ailette plane (18), respectivement.

5. Boîtier de montage (100) selon la revendication 4, dans lequel au moins une desdites premières et secondes ailettes sensiblement planes (16, 18) est déformable élastiquement.

6. Boîtier de montage (100) selon une ou plusieurs des revendications précédentes, dans lequel ledit logement (1) comprend une base (3) conçue pour recevoir un ou plusieurs dispositifs électriques, et un couvercle (4) conçu pour être relié à ladite base (3) et ayant une ou plusieurs fenêtres (7), dans lequel ladite une ou plusieurs protubérances (11) sont intégralement composées avec et s'étendant vers l'extérieur dudit couvercle (4).
